(19) Europäisches Patentamt
European Patent Office
Office européen des brevets

(11) EP 2 686 851 B1

(12) FASCICULE DE BREVET EUROPEEN

(45) Date de publication et mention de la délivrance du brevet:
17.12.2014 Bulletin 2014/51

(21) Numéro de dépôt: 12714791.6

(22) Date de dépôt: 15.03.2012

(51) Int Cl.:
G21C 7/08 (2006.01)     G21C 7/22 (2006.01)
G21D 3/10 (2006.01)     G21D 3/16 (2006.01)
G21D 3/00 (2006.01)     G06F 17/10 (2006.01)

(86) Numéro de dépôt international:
PCT/FR2012/050548

(87) Numéro de publication internationale:
WO 2012/123685 (20.09.2012 Gazette 2012/38)

(54) **PROCEDE DE PILOTAGE D'UN REACTEUR NUCLEAIRE A EAU PRESSURISEE LORS D'UN SUIVI DE CHARGE**

VERFAHREN FÜR DEN BETRIEB EINES DRUCKWASSERREAKTORS IM LASTFOLGEBETRIEB

METHOD FOR OPERATING A PRESSURIZED WATER REACTOR DURING LOAD FOLLOW OPERATION

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 15.03.2011 FR 1152101

(43) Date de publication de la demande:
22.01.2014 Bulletin 2014/04

(73) Titulaire: Areva NP
92400 Courbevoie (FR)

(72) Inventeur: GROSSETETE, Alain
F-92000 Nanterre (FR)

(74) Mandataire: Lebkiri, Alexandre
Cabinet Camus Lebkiri
87 Rue Taitbout
75009 Paris (FR)

(56) Documents cités:
EP-A1- 0 414 256     EP-A2- 0 083 776
FR-A1- 2 529 706

**Description**

La présente invention concerne un procédé de pilotage d'un réacteur nucléaire à eau pressurisée lors d'un suivi de charge.

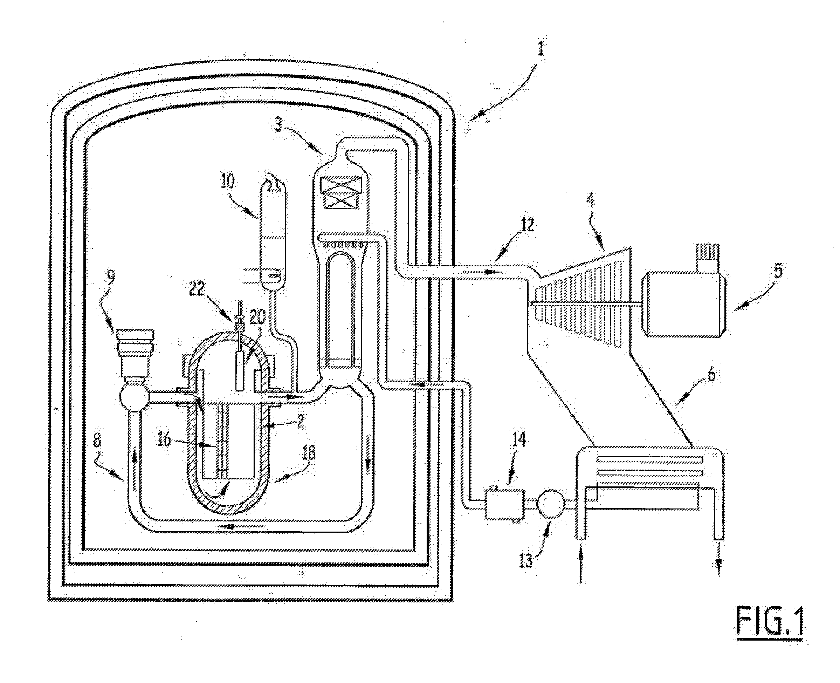

La figure 1 illustre schématiquement un tel réacteur nucléaire 1 à eau pressurisée qui comporte de façon classique :

- un coeur 2 divisé en une zone supérieure et une zone inférieure et produisant une puissance,
- des générateurs de vapeur 3, un seul générateur étant représenté,
- une turbine 4 couplée à un générateur 5 d'énergie électrique, et
- un condenseur 6.

Le réacteur 1 comprend également un circuit primaire 8 équipé de pompes 9, une seule pompe étant représentée, et dans lequel circule de l'eau sous pression, selon le trajet matérialisé par les flèches. Cette eau remonte notamment vers le coeur 2 pour y être réchauffée en assurant la réfrigération du coeur 2. L'eau assure également une fonction de modération, c'est-à-dire de ralentissement des neutrons produits par le combustible nucléaire.

Le circuit primaire 8 comprend en outre un pressuriseur 10 permettant de réguler la pression de l'eau circulant dans le circuit primaire 8.

L'eau du circuit primaire 8 alimente également les générateurs de vapeur 3 où elle est refroidie en assurant la vaporisation d'eau circulant dans un circuit secondaire 12.

La vapeur produite par les générateurs 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend en aval du condenseur 6 une pompe 13 et un réchauffeur 14.

Le coeur 2 comprend des assemblages combustibles 16 qui sont chargés dans une cuve 18. Un seul assemblage 16 est représenté sur la figure 1, mais le coeur comprend une pluralité d'assemblages 16.

Les assemblages combustibles 16 comportent des crayons de combustible nucléaire formés, de manière classique, d'une gaine en alliage, à base de zirconium, renfermant un empilement de pastilles de combustible nucléaire à base d'oxyde d'uranium ou d'un mélange d'oxyde d'uranium et d'oxyde de plutonium.

Le réacteur 2 comporte des barres de contrôle 20, également appelées grappes de contrôle, de la réactivité du coeur qui sont disposées dans la cuve 18, au-dessus de certains assemblages 16, et qui sont susceptibles d'occuper dans le coeur une pluralité de positions d'insertion. Une seule barre 20 est représentée sur la figure 1, mais le coeur 2 comporte plusieurs dizaines de groupes de barres de contrôle 20. Les barres de contrôle 20 peuvent être déplacées verticalement par des mécanismes 22 pour venir s'insérer, à différentes positions d'insertion, dans les assemblages combustibles 16 qu'elles surplombent.

De façon classique, chaque barre de contrôle 20 comporte une pluralité de crayons de contrôle en matériau absorbant les neutrons.

Ainsi, le déplacement vertical, ou état d'enfoncement, de chaque barre 20 à l'intérieur des assemblages combustibles 16 permet de réguler la réactivité du coeur du réacteur 1, autorisant ainsi des variations de la puissance globale fournie par le coeur 2 depuis la puissance nulle jusqu'à la puissance nominale (notée par la suite PN).

Il peut s'avérer utile, en effet, notamment dans des pays comme la France où 80% de l'électricité est produite par des réacteurs nucléaires, que la puissance globale fournie par les réacteurs varie afin de s'adapter aux besoins du réseau électrique qu'ils alimentent ; on parle alors de suivi de réseau ou de suivi de charge.

Lors d'un suivi de charge, la puissance produite par le réacteur est régulée de façon à correspondre à un programme préétabli par le service d'exploitation du réseau électrique.

L'ajustement de la puissance fournie par le réacteur est réalisé par des moyens de pilotage positionnant dans le coeur les barres de contrôle constituées d'élément neutrophage à différentes positions d'insertion de façon à absorber plus ou moins les neutrons et/ou ajustant éventuellement la concentration d'un composé absorbant neutronique, tel que le bore, dans le fluide caloporteur primaire, en fonction de la puissance désirée et/ou des mesures issues de l'instrumentation du coeur du réacteur.

Par exemple, les moyens de pilotage sont formés par un ensemble d'équipements électroniques et électriques qui à partir de mesures issues de chaînes d'instrumentation et en les comparant à des seuils, élaborent des ordres de déplacement de barres de contrôle 20 et/ou de modification de la concentration en bore dans le fluide caloporteur primaire par injection d'eau (dilution) ou de bore (borication).

Il est connu différents modes de pilotage d'un réacteur nucléaire à eau pressurisée. D'une façon générale, le pilotage consiste à contrôler et à réguler au minimum la température moyenne du fluide caloporteur primaire $T_{moy}$ et la distribution de puissance (thermique et neutronique) et en particulier la distribution axiale de puissance DA afin d'éviter la formation d'un déséquilibre de puissance entre la zone haute et la zone basse du coeur.

Les méthodes de régulation de ces paramètres varient en fonction des différents modes de pilotage utilisés. D'une façon générale, la température moyenne $T_{moy}$ est régulée par le déplacement des barres de contrôles 20 en fonction des différents paramètres tels que la puissance demandée à la turbine, la valeur courante de la température du fluide caloporteur, et/ou éventuellement par la modification de la concentration en bore dans le fluide caloporteur primaire, ce qui permet indirectement d'adapter les positions des barres de contrôles 20 à une position souhaitée, notamment afin d'obtenir une distribution axiale de puissance DA souhaitée et/ou une capacité de remontée rapide de la puissance du coeur à la puissance désirée.

Le choix du mode de pilotage d'un réacteur nucléaire est déterminé en prenant en considération le fait que l'action des barres de contrôle a des effets immédiats alors que l'action par injection de bore en solution est comparativement plus lente.

En outre, l'augmentation de la concentration en bore en solution dans le fluide caloporteur primaire demande des moyens de stockage et d'injection d'acide borique et impose donc des contraintes supplémentaires de conception.

Ainsi, on tend à n'utiliser l'injection de bore ou d'eau en solution que pour corriger les effets à long terme sur la réactivité du fonctionnement du réacteur, c'est-à-dire essentiellement l'effet xénon et le vieillissement du combustible.

Afin de répondre aux besoins du réseau électrique, le pilotage du réacteur est ainsi préférentiellement effectué par le déplacement des barres de contrôles.

Cependant, l'insertion des barres de contrôle affecte, de façon préjudiciable, la distribution axiale de puissance produite dans le réacteur. Il peut en résulter la formation de pics de puissance dans le coeur ainsi que le développement d'oscillations de la concentration xénon à plus long terme, propices à l'accentuation de ces pics de puissances, facteurs intervenant de façon restrictive dans la procédure de pilotage et imposant un recours correctif en modifiant la concentration en bore dans le fluide de refroidissement primaire.

Or en suivi de charge, c'est-à-dire avec un niveau de production de puissance épousant une courbe journalière, et même en mode asservi, par téléréglage, les variations de production de puissance multiplient les actions de pilotage, avec les conséquences défavorables mentionnées plus haut, sollicitant de manière importante les mécanisme des barres de contrôles et provoquant des volumes d'effluents importants dus aux opérations répétées de dilution et de borication du fluide caloporteur.

Afin de répondre à ces difficultés, il a été développé des méthodes de pilotage d'un réacteur à eau pressurisée déterminant les positionnements des barres de contrôle dans le coeur, permettant de limiter les perturbations de la distribution axiale de puissances et le recours à l'utilisation du bore, dont la concentration est ajustée de manière à compenser principalement les effets du dégagement de xénon et du vieillissement des crayons combustibles.

Cependant, cette méthode de pilotage n'est pas toujours optimisée et ne permet pas toujours de minimiser les volumes d'effluents ainsi que le déplacement des groupes de barres de contrôle. De plus la minimisation des volumes d'effluents ainsi que de la sollicitation des mécanismes d'insertion des barres de contrôle reste un souci permanent de l'exploitant.

Un procédé de pilotage d'un réacteur nucléaire à eau pressurisée lors d'un suivi de charge est connu du document EP 0 083 776 A2.

Dans ce contexte, l'invention vise à résoudre les problèmes mentionnés ci-dessus en permettant d'optimiser la position consigne des grappes de contrôle dans le coeur du réacteur, de minimiser les déplacements de ces grappes et ainsi minimiser éventuellement les volumes d'effluents provoqués par les opérations de dilution/borication du fluide caloporteur primaire lors des variations de puissance du réacteur.

A cette fin, l'invention propose un procédé de pilotage d'un réacteur nucléaire à eau sous pression, ledit réacteur comportant :

- un coeur produisant une puissance ;
- une pluralité de groupes de barres de contrôle de la réactivité dudit coeur susceptible d'occuper dans le coeur une pluralité de positions d'insertion étagées verticalement à partir d'une position haute ;
- des moyens pour acquérir des grandeurs représentatives des conditions de fonctionnement du coeur ;

ledit procédé comportant les étapes consistant à :

- mesurer la puissance effective du réacteur nucléaire ;
- acquérir une valeur de consigne de la puissance cible désirée du réacteur nucléaire ;

ledit procédé étant caractérisé en ce qu'il comporte en outre les étapes consistant à :

- acquérir une durée estimée d'augmentation de puissance pour atteindre ladite valeur de consigne de la puissance cible désirée, ladite durée estimée correspondant à la durée d'augmentation de puissance pour passer de ladite puissance effective à ladite valeur de consigne de la puissance cible ;
- déterminer la position consigne d'au moins un groupe de barres de contrôle parmi ladite pluralité de barres de contrôle pour atteindre ladite valeur de consigne de ladite puissance cible désirée en fonction de ladite durée estimée, de ladite puissance effective mesurée et de ladite valeur consigne de ladite puissance cible ;
- contrôler la position dudit au moins un groupe de barres de contrôle de façon à le placer à lsa position consigne (Z).

Grâce à l'invention, il est possible d'optimiser la position consigne des barres de contrôle lors d'un suivi de charge par la prise en compte de l'évolution de l'effet xénon, élément neutrophage, intervenant durant ce suivi de charge. La position consigne optimisée est déterminée en prenant en compte un paramètre de temps représentatif de l'estimation de la durée d'augmentation de puissance pour atteindre la valeur de consigne de la puissance cible désirée.

A titre d'exemple, la position consigne retenue pourra être celle donnant le meilleur comportement du coeur lors de la remontée de puissance, c'est-à-dire la position permettant aux barres de contrôle de se retrouver dans la position optimale lorsque la puissance cible est atteinte. Par exemple, la position optimale de barres de contrôle à la puissance nominale à 100% pouvant être la position normale des barres de contrôle en fonctionnement stabilisé à 100% (i.e. la position nominale des barres de contrôle).

Grâce au procédé selon l'invention, il est également possible de minimiser les volumes d'effluents dans le coeur du réacteur par une gestion adaptée des opérations de dilution et de borication tout en préservant les mécanismes de déplacement des barres de contrôle par la réduction du nombre de pas des barres de contrôle en limitant les déplacements des barres de contrôle uniquement aux déplacements nécessaires à la variation de puissance dans la durée souhaitée.

Selon une autre caractéristique, le procédé comporte une étape consistant à acquérir un instant estimé de début de ladite augmentation de puissance, ledit instant estimé correspondant à la fin du palier de ladite puissance effective et étant pris en compte dans l'étape de détermination de la position consigne d'au moins un groupe de barres de contrôle.

Selon une autre caractéristique, l'étape de contrôle est réalisée de façon à ce que ledit au moins un groupe de barres de contrôles soit positionné à sa position consigne au plus tard au début de ladite augmentation de puissance.

Selon une autre caractéristique, le procédé comporte une étape de régulation de la concentration d'un élément neutrophage tel que le bore dans le fluide caloporteur en fonction de ladite position consigne d'au moins un groupe de barres de contrôle parmi ladite pluralité de barres de contrôle. On entend par régulation une ou plusieurs opérations de diminution ou d'augmentation de la concentration dudit élément neutrophage tel que le bore (i.e. dilution ou borication) dans le fluide caloporteur primaire du réacteur nucléaire.

Selon une autre caractéristique, ladite étape de détermination de ladite position consigne dudit au moins un groupe de barres de contrôle est réalisée via des moyens logiciels mettant en oeuvre un code neutronique. On entend par code neutronique un code résolvant périodiquement l'équation de la diffusion et actualisant le bilan isotopique du coeur au cours de l'épuisement du combustible.

Selon une autre caractéristique, ladite étape de détermination de ladite position consigne dudit au moins un groupe de barres de contrôle comporte

- une sous-étape de détermination d'une première position d'au moins un groupe de barres de contrôle en fonction de ladite puissance effective mesurée et de ladite valeur de consigne de la puissance cible ;

- une sous-étape de détermination de la variation de la concentration de xénon dans ledit coeur dudit réacteur lors de la future augmentation de puissance, ladite variation de concentration de xénon étant fonction de ladite durée estimée, et/ou de ladite puissance effective mesurée et/ou de ladite valeur de consigne de la puissance cible ;

- une sous-étape de détermination d'un facteur correctif de la position d'au moins un groupe de barres de contrôle fonction de ladite variation de la concentration de xénon.

Selon une autre caractéristique, ladite étape de détermination de ladite position consigne dudit au moins un groupe de barres de contrôle comporte

- une sous-étape de détermination d'une première position d'au moins un groupe de barres de contrôle en fonction de ladite puissance effective mesurée et de ladite valeur de consigne de la puissance cible ;

- une sous-étape de détermination de la variation de la concentration de xénon dans ledit coeur dudit réacteur lors de la future augmentation de puissance, ladite variation de concentration de xénon étant fonction de ladite durée estimée, et/ou de ladite puissance effective mesurée et/ou de ladite valeur de consigne de la puissance cible, et/ou dudit instant estimé de début de l'augmentation de puissance ;

- une sous-étape de détermination d'un facteur correctif de la position d'au moins un groupe de barres de contrôle fonction de ladite variation de la concentration de xénon.

D'autres caractéristiques et avantages de l'invention ressortiront plus clairement de la description qui en est donnée ci-dessous, à titre indicatif et nullement limitatif, en référence aux figures annexées, parmi lesquelles :

- la figure 1 illustre schématiquement un réacteur à eau pressurisée ;

- la figure 2 est une représentation schématique illustrant les différentes étapes du procédé selon l'invention ;

- la figure 3 illustre un deuxième mode de réalisation de l'étape de détermination de la position consigne Z du procédé selon l'invention illustré à la figure 2 ;

- la figure 4A représente de manière schématique l'évolution de la puissance lors d'un suivi de charge ainsi que l'évolution de la concentration en xénon lors de ce même suivi de charge ;

- la figure 4B représente de manière schématique l'évolution des positions des barres de contrôles ainsi que l'évolution du débit de dilution et de borication du fluide caloporteur primaire lors du suivi de charge représenté à la figure 4A avec un procédé de pilotage selon l'art antérieur ;

- la figure 4C représente de manière schématique une comparaison

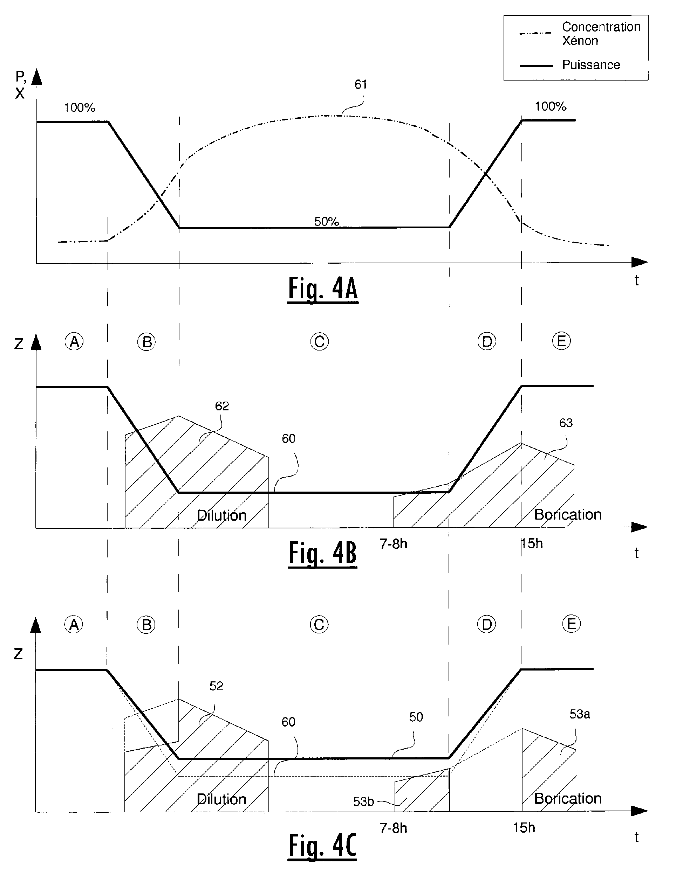

des évolutions des positions des barres de contrôles ainsi que des évolutions du débit de dilution et de borication du fluide caloporteur primaire lors du suivi de charge représenté à la figure 4A entre le procédé de pilotage illustré à la figure 4B et le procédé de pilotage selon l'invention.

La figure 1 a déjà été décrite précédemment en référence à la présentation générale de l'invention.

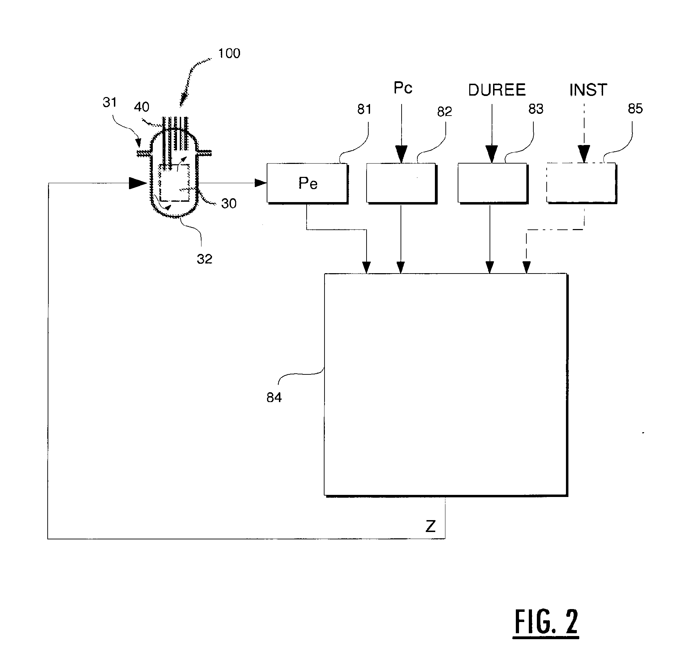

La figure 2 illustre de manière schématique les étapes principales du procédé d'optimisation selon l'invention visant à piloter un réacteur nucléaire et notamment un réacteur à eau sous pression.

Un réacteur à eau pressurisée est représenté de manière symbolique par la référence 100, sur la figure 2 et comporte comme indiqué précédemment à la figure 1 :

- un coeur 30 comportant des assemblages de combustibles nucléaire ;
- une cuve 32 comportant le coeur 30 du réacteur ;
- des générateurs de vapeur (non représenté) apte à entraîner un alternateur couplé au réseau de distribution électrique ;
- un circuit primaire 31 reliant en circuit fermé la cuve 32 à un coté primaire du générateur de vapeur ;
- un circuit secondaire (non représenté) reliant en circuit fermé un coté secondaire des générateurs de vapeur à une turbine.

Le circuit primaire 31 est apte à assurer la circulation à travers le coeur 30 d'un fluide caloporteur primaire sous pression, selon le trajet matérialisé par les flèches. Le fluide caloporteur primaire est formé essentiellement d'eau et de bore dissout. Le fluide caloporteur remonte vers le coeur 30 s'échauffant au contact des assemblages combustibles assurant ainsi la réfrigération du coeur 30. Le fluide caloporteur primaire alimente également les générateurs de vapeur où il est refroidi en cédant sa chaleur. Le circuit secondaire est apte à assurer la circulation d'un fluide de refroidissement secondaire, comprenant essentiellement de l'eau, ce liquide étant vaporisé dans les générateurs de vapeur par la chaleur cédée par le fluide primaire. La vapeur produite par les générateurs est canalisée vers la turbine qu'elle entraîne, puis vers un condenseur dans lequel la vapeur est condensée par échange de chaleur indirect avec de l'eau de refroidissement circulant dans le condenseur. La vapeur condensée est ensuite renvoyée vers les générateurs de vapeur.

L'alternateur couplé à la turbine fournit au réseau électrique une puissance électrique variable en fonction de la demande du réseau. Le réacteur 100 est ainsi piloté de manière à adapter en permanence la puissance fournie par le coeur à la puissance électrique demandée par le réseau, en faisant varier la réactivité du coeur.

Dans ce but, le réacteur 100 comporte en outre :

- des moyens pour ajuster la concentration en bore (non représentés) dissout dans le fluide caloporteur primaire, par injection d'une solution d'acide borique concentrée dans le liquide primaire pour faire varier la concentration de bore à la hausse, ou par injection d'eau pure pour faire varier la concentration de bore à la baisse ;
- des barres de contrôle 40 de la réactivité du coeur 30, chacune des barres 40 étant susceptible d'occuper dans le coeur 30 une pluralité de positions d'insertion étagées verticalement à partir d'une position haute ;
- des moyens pour insérer sélectivement chaque groupe de barres de contrôle dans le coeur 30, du haut vers le bas, jusqu'à une des positions d'insertion déterminés par le procédé ;
- des moyens pour acquérir des grandeurs représentatives du fonctionnement du réacteur, telles que : le flux neutronique, la température du liquide primaire dans la branche froide TBF du circuit primaire, la température du liquide primaire dans la branche chaude TBC du circuit primaire, la position des grappes de contrôle 40 ;
- des moyens de mesure de la puissance effective Pe du coeur à partir des grandeurs représentatives du fonctionnement du réacteur ;
- des moyens d'acquisition de consignes de pilotage fixées par un opérateur au moyen d'une interface homme/machine (non représentée).

Le procédé de pilotage selon l'invention représenté à la figure 2 permet de minimiser les déplacements des barres de contrôle 40 lors d'un suivi de charge par la détermination d'une position consigne Z des barres de contrôle 40 prenant en compte la variation de l'effet xénon lors de la reprise de charge, le procédé déterminant la position des barres de contrôle 40 en fonction de la durée estimée de l'augmentation de puissance de la reprise.

Le procédé selon l'invention comporte une première étape d'acquisition de la puissance effective Pe, illustrée par le bloc 81.

Lors des étapes illustrées respectivement par les blocs 82 et 83, les moyens d'acquisition acquièrent une valeur consigne de la puissance cible Pc, que l'on désire atteindre, ainsi qu'une durée DUREE correspondant à l'intervalle de temps estimé de l'augmentation de puissance du réacteur pour atteindre la valeur consigne Pc en partant de la valeur effective de puissance Pe.

Ces valeurs consignes Pc, DUREE sont renseignées par l'opérateur lors de la programmation du suivi de charge via une interface homme/machine (non représentée).

Le procédé de pilotage comporte en outre une étape de détermination de la position consigne Z des barres de contrôle 40, illustrée par le bloc 84. La position Z des barres de contrôle 40 est déterminée en fonction de la valeur de la puissance effective Pe, de la valeur de la puissance consigne Pc, de l'intervalle de temps estimé DUREE de l'augmentation de puissance du réacteur pour atteindre la valeur consigne Pc.

Selon une variante de réalisation, les moyens d'acquisition acquièrent également une valeur complémentaire correspondant à un instant estimé de la reprise de charge INST (i.e. l'instant de fin de la durée du palier de la puissance effective). Ainsi dans cette variante de réalisation, la détermination de la position Z des barres de contrôle 40 sera plus précise et fonction de la valeur de la puissance effective Pe, de la valeur de la puissance consigne Pc, de l'intervalle de temps estimé DUREE de l'augmentation de puissance du réacteur pour atteindre la valeur consigne Pc ainsi que de l'instant estimé de reprise de charge INST.

Selon un premier mode de réalisation du procédé selon l'invention, l'étape 84 de détermination de la position consigne Z des barres de contrôle 40 est réalisée par des moyens logiciels présents dans le réacteur nucléaire 100 mettant en oeuvre un code de calcul neutronique simulant le comportement du réacteur à partir des données représentatives des caractéristiques matérielles, géométriques et neutroniques du coeur, ainsi que des conditions de fonctionnement du coeur, en continu, représentant le modèle 3D du coeur.

On peut citer à titre d'exemple le code de calcul neutronique SMART fondé sur une modélisation 3D de type nodal avancé. Les principes du calcul neutronique de coeur sont décrits plus en détail dans le document « Méthodes de calcul neutronique de coeur » (Techniques de l'ingénieur - B 3 070 - Giovanni B. Bruna et Bernard Guesdon).

Ces moyens logiciels mettant en oeuvre un code de calcul neutronique permettent de déterminer par calcul itératif la position consigne Z idéale des barres de contrôle à partir des données d'entrées, telles que la puissance effective Pe, la valeur consigne Pc de la puissance cible que l'on souhaite atteindre et la durée estimée DUREE de l'augmentation de puissance, et optionnellement de l'instant estimé de reprise de charge INST, saisies par l'opérateur.

A titre d'exemple, la position consigne Z retenue par les moyens logiciels pourra être celle donnant le meilleur comportement du coeur lors de la remontée de puissance, c'est-à-dire la position permettant aux barres de contrôle 40 de se retrouver dans la position optimale lorsque la puissance cible est atteinte. La position optimale de barres de contrôle 40 à la puissance nominale à 100% pouvant être la position normale des barres de contrôle en fonctionnement stabilisé à 100% (i.e. la position nominale des barres de contrôle).

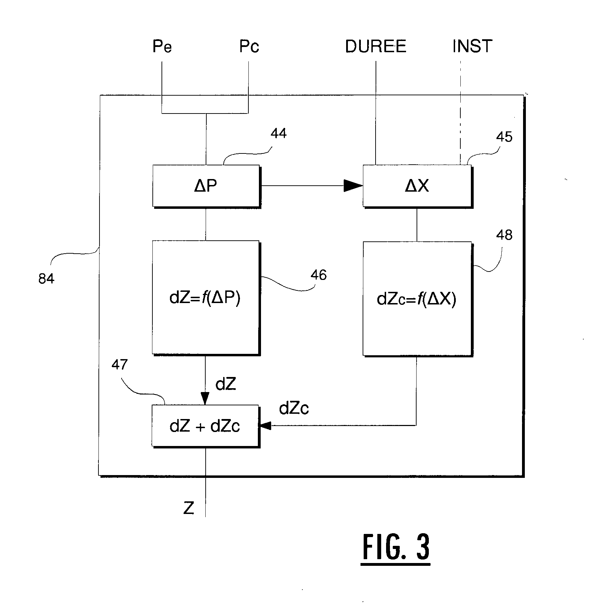

La figure 3 illustre un deuxième mode de mise en oeuvre de l'étape 84 de détermination de la position consigne Z des barres de contrôle 40. Ce deuxième mode de mise en oeuvre permet de simplifier cette étape de détermination en comparaison avec le mode de réalisation précédent et permet de s'affranchir de l'utilisation d'un code de calcul neutronique.

Selon ce deuxième mode, des moyens de comparaison permettent lors d'une sous-étape, illustrée par le bloc 44, de comparer l'écart ΔP entre la puissance effective Pe et la valeur consigne Pc de la puissance cible que l'on souhaite atteindre.

Les moyens de pilotage comportent des moyens logiciels associés à des moyens de stockage comportant une table de corrélation $dZ = f(\Delta P)$ permettent de définir, lors de l'étape illustrée par le bloc 46, une position dZ des barres de contrôle en fonction de l'écart ΔP de la puissance. La position dZ déterminée lors de cette étape correspond à la position d'insertion des barres de contrôle dans laquelle il est possible d'atteindre la valeur consigne Pc de la puissance sans nécessité de compensation de l'effet xénon.

Le bloc 45 illustre une étape complémentaire dans laquelle les moyens logiciels estiment une variation de l'effet Xénon ΔX en fonction de l'écart ΔP de puissance et de la durée estimée DUREE de la variation de puissance saisie par l'opérateur.

Selon un mode de réalisation avantageux, cette estimation de la variation de xénon ΔX, lors de la variation de puissance, est proportionnelle à la durée DUREE de la variation et à l'amplitude de la variation de puissance, et peut s'exprimer par la relation :

$$\Delta X = A \times (DUREE \times \Delta P)$$

où

- ΔX est la variation de l'effet xénon exprimée en pcm (pour cent mille) ;
- A est un coefficient de proportionnalité exprimé en pcm/(heure × %PN) ;
- DUREE est la durée estimée de la variation de puissance exprimée en heure ;
- ΔP est l'écart de puissance exprimé en %PN.

Toutefois, l'estimation de la variation de xénon n'est pas limitée à un modèle linéaire et peut être réalisée au moyen d'un modèle de calcul plus complexe prenant en compte l'inexactitude de la linéarité de la variation de xénon ΔX avec la durée DUREE et l'écart de puissance ΔP.

Selon une variante de réalisation, l'estimation de la variation de xénon peut également être fonction de l'instant estimé INST de reprise de charge de façon à estimer plus précisément la variation de xénon.

Ainsi, la variation de xénon ΔX lors d'une remontée ou d'une baisse de puissance est d'autant plus importante que la durée de cette variation est importante (dans la mesure où la durée de cette variation est inférieure typiquement à 7 heures). On considère ainsi que pour une variation de puissance dont l'intervalle de temps, pour atteindre la puissance consigne Pc, est supérieure à une heure, et notamment pour un retour en puissance, l'évolution du xénon dans le coeur du réacteur devient alors significative.

Comme le montre la courbe 61 de concentration de xénon du schéma représenté à la figure 4A, l'effet xénon apparait dès l'amorce d'une baisse de charge et continue à varier lors du palier bas de puissance.

Cette variation de l'effet xénon $\Delta X$ estimée, durant l'intervalle de temps DUREE imparti à la variation de puissance, permet ainsi de compenser la position dZ déterminée en fonction de l'écart $\Delta P$ de puissance, par l'ajout d'un facteur correctif dZc déterminé, lors de l'étape illustrée par le bloc 48, par la relation :

$$dZ_c = f(\Delta X)$$

où $f$ est une fonction croissante.

La consigne de position Z des barres de contrôle est alors déterminée par la combinaison de la position dZ et du facteur correctif dZc lors de l'étape illustrée par le bloc 47.

Ainsi, dans ce deuxième mode de réalisation, il n'est pas nécessaire de disposer de moyens logiciels mettant en oeuvre un code neutronique de type SMART pour déterminer une position consigne Z optimisée permettant de minimiser les mouvements des grappes de commande.

Une fois la position consigne Z des barres de contrôle déterminée, le contrôle et la régulation des positions des barres de contrôle à leurs positions consignes Z sont réalisés de façon classique par les modes de pilotage connus, en compensant éventuellement les mouvements des barres par un autre moyen de contrôle de la réactivité, comme par exemple la modification de la concentration d'un composé absorbant neutronique, tel que le bore, dans le fluide caloporteur primaire par des opérations de dilution/borication.

Selon le mode de pilotage utilisé, on utilisera des injections de bore ou d'eau et/ou l'utilisation d'autres groupes de barres de contrôle plus ou moins absorbant neutronique que l'on positionnera de façon stratégique dans le coeur.

Par exemple, lorsque cela est possible, on privilégiera le retour des groupes de barres de contrôle à leur position de consigne en profitant des variations de la concentration de xénon plutôt que par des opérations de dilution/borication. A titre d'exemple, si la position de consigne correspond à une position plus extraite que la position à laquelle les groupes arrivent suite à la baisse de charge, on laissera les groupes s'extraire en compensant l'augmentation de la concentration de xénon, puis on ne commencera l'opération de dilution que lorsque les groupes auront rejoint leur position de consigne.

Les schémas représentés aux figures 4B et 4C illustrent l'optimisation du pilotage d'un réacteur nucléaire à eau pressurisé en suivi de charge en comparaison avec un procédé de pilotage ne prenant pas en compte l'effet xénon dans la détermination de la position Z des barres de contrôle.

La figure 4B illustre plus particulièrement l'évolution des positions des barres de contrôles (courbes 60) ainsi que l'évolution du débit de dilution et de borication du fluide caloporteur primaire, selon un procédé de l'art antérieur, lors d'un exemple de suivi de charge représenté à la figure 4A.

Les zones hachurées 62 et 63 représentent respectivement le volume d'eau de la dilution et le volume de bore de la borication utilisés lors du suivi de charge de la figure 4A.

La figure 4C représente l'évolution des positions des barres de contrôles (courbe 50) ainsi que l'évolution du débit de dilution et de borication du fluide caloporteur primaire, avec le procédé de pilotage selon l'invention, lors du suivi de charge illustré à la figure 4A.

La figure 4C illustre également l'évolution des positions des barres de contrôles (courbes 60) ainsi que l'évolution du débit de dilution et de borication du fluide caloporteur primaire illustré à la figure 4B, à titre de comparaison.

Les zones hachurées 52, 53a et 53b représentent respectivement le volume d'eau de la dilution et le volume de bore de la borication utilisés lors du suivi de charge de la figure 4A.

Le suivi de charge, illustré à titre d'exemple à la figure 4A, est un suivi de charge dans lequel on effectue une baisse de charge (zone B) à partir d'un palier haut à 100% de la puissance nominale PN (zone A) jusqu'à un palier bas (zone C) équivalent à 50% de PN, durant une période relativement longue, de l'ordre de dix heures, avant une reprise de charge (zone D) jusqu'au retour à la puissance nominale représenté dans la zone E.

Les variations de puissance, baisse de puissance et remontée de puissance, sont relativement longues, de l'ordre de deux heures, avec une vitesse de progression de l'ordre de 0,5% de la puissance nominale par minute. Typiquement, les variations de puissance ont une vitesse de progression inférieure ou égale à 1% de la puissance nominale par minute.

Sur la figure 4C, le profil 50 en trait épais plein schématise un exemple d'évolution de la position Z des barres de contrôles se trouvant dans la cuve du réacteur nucléaire, déterminée par le procédé selon l'invention. En comparaison, le profil 60 en trait plein sur la figure 4B, et également représenté en trait pointillés sur la figure 4C, schématise l'évolution de la position Z des barres de contrôle déterminée par un mode de pilotage selon l'art antérieur ne prenant pas en compte la variation de l'effet xénon durant le suivi de charge.

Ainsi, la croissance de l'effet xénon (élément neutrophage) intervenant dès la baisse de charge, illustrée par la courbe 61 sur la figure 4A, est compensée par une insertion moindre des barres de contrôle 40 dans le coeur 30 du réacteur 100 lors de la baisse de charge. L'insertion moindre des barres de contrôle 40 déterminée par la position consigne Z permet à l'opérateur de diminuer le débit de dilution de bore par diminution du volume d'eau injectée (zone hachurée 52), voire de supprimer la dilution, lors de la baisse de charge (zone B).

Grâce à l'invention, l'insertion moindre des barres de contrôle 40 permet de réduire le volume d'eau de la dilution, représentée par la zone hachurée 52, lors de la baisse de charge par rapport au volume d'eau de la dilution représentée par la zone hachurée 62, et par conséquent limite les volumes d'effluents.

Lors de la reprise de charge (zone D) la remontée des barres de contrôle étant plus faible, la variation de xénon lors de cette reprise de charge est compensée par cette insertion moindre des barres, ce qui permet de stopper le débit de borication durant la reprise de charge, c'est-à-dire lors de la remontée de puissance de 50% à 100% de PN, tel qu'illustré à la figure 4C au niveau de la zone D. Ainsi lors de la reprise de charge, le procédé selon l'invention permet de réduire le volume de bore injecté dans le fluide caloporteur primaire par rapport au volume de bore injecté avec un procédé connu de pilotage (figure 4B).

De plus, l'insertion des barres de contrôles étant moindre, le procédé selon l'invention permet de réduire le nombre de pas nécessaires lors d'un suivi de charge et notamment entre un palier haut et un palier bas. Le procédé permet ainsi de réduire la sollicitation des mécanismes de déplacements des barres de contrôles.

Ainsi, le procédé selon l'invention permet d'optimiser l'insertion des barres de contrôles dans le coeur afin de réduire le nombre de pas entre différentes positions permettant de préserver les moyens de déplacement de chaque groupe de barres pendant les années de service du réacteur.

L'insertion des groupes de barres de contrôle à la position consigne Z déterminé par le procédé selon l'invention permet également de contrôler la capacité de remontée en puissance correspondant à la puissance susceptible d'être produite par ledit coeur 30 lors de la remontée des barres de contrôle.

Ce procédé est directement applicable aux différents modes de pilotage connus de l'homme du métier, à savoir les modes de pilotage communément nommés mode A, mode G, mode X et mode T.

Le mode de pilotage G connu de l'homme du métier prend en compte lors de la détermination de la position d'insertion des barres de contrôle l'éventualité d'un retour rapide à 100% de la puissance nominale par le retrait des barres de contrôle.

Pour cela, le mode de pilotage G pilote deux types de groupes de barres de contrôle ayant des absorptivités neutroniques différentes. Un des groupes a sa position d'insertion qui est fonction du niveau de puissance et garantit la possibilité d'un retour rapide à la puissance nominale PN. On entend par le terme « rapide » une reprise de charge suffisamment rapide pour que la variation de la concentration de xénon soit faible, c'est-à-dire une reprise de charge ayant une vitesse de progression typiquement comprise entre 3% et 5% PN/min. L'autre groupe de barres de contrôle, plus lourd, est dédié au contrôle de température moyenne $T_{moy}$ du réacteur, et indirectement par des opérations de dilution et de borication au contrôle de la distribution axiale DA.

Les modes de pilotage X et T sont des modes de pilotages avancés prenant en compte dans le positionnement des barres de contrôle, la capacité de remontée en puissance $P_{max}$.

On entend par capacité de remontée en puissance $P_{max}$, la possibilité de remonter rapidement en puissance, c'est-à-dire avec une vitesse de progression comprise typiquement entre 2% et 5% PN/min, d'une puissance réduite à une puissance élevée (consigne Pmax) définie préalablement par l'opérateur lors de la programmation du suivi de charge.

Ainsi pour des variations de puissance, et notamment pour un retour en puissance lent, typiquement supérieur à une heure, la gestion des positions d'insertion des barres de contrôle n'est pas optimale car elle ne prend pas en compte l'évolution de l'effet xénon.

Le procédé selon l'invention permet de prendre en considération cette évolution de xénon lors d'une remontée en puissance permettant ainsi d'optimiser l'insertion des barres de contrôle dans le coeur du réacteur lors d'un suivi de charge « lent ».

Le procédé selon l'invention, appliqué aux modes de pilotage G, T et X permet ainsi d'améliorer lesdits modes par une insertion moindre des différents groupes de barres de contrôle dans le coeur du réacteur limitant ainsi l'utilisation de l'injection de bore ou d'eau dans le liquide primaire nécessaire à la compensation de la concentration de xénon dans le fluide caloporteur.

Ce procédé selon l'invention est également applicable au mode de pilotage, dit mode A, consistant à contrôler et à réguler la température $T_{moy}$ et la distribution axiale de puissance DA.

Le mode de pilotage A est le mode le plus simple utilisé pour piloter les réacteurs nucléaires lors d'un suivi de charge. Lorsqu'il y a une baisse de charge de la turbine, les barres de contrôles sont insérées dans le coeur afin de limiter la puissance du coeur et ainsi éviter une augmentation de la température du circuit primaire de refroidissement. Dans ce mode de pilotage, les barres de contrôle sont insérées jusqu'à un seuil bas définissant la limitation acceptable de perturbation de la distribution axiale de puissance DA. Lorsqu'on souhaite diminuer davantage la puissance, on procède alors à une injection de bore dans le fluide caloporteur primaire afin d'en augmenter sa concentration et d'accompagner la baisse de la puissance primaire. Dans le cas d'une remontée de puissance, on procède à une diminution de la concentration de bore par sa dilution au moyen d'injection d'eau.

Cependant, l'injection et la dilution de bore ont une vitesse d'action limitée qui ne permet pas des variations de puissances rapides ou de grandes amplitudes.

Le procédé selon l'invention, appliqué au mode de pilotage A, permet ainsi de connaitre la vitesse de progression à laquelle la reprise de charge est possible sans injection d'eau (i.e. sans dilution). En effet, si la position de consigne déterminée par le procédé selon l'invention est dans les limites permises, alors la reprise de charge peut être effectuée avec la vitesse de progression qui est fonction de la durée de variation de puissance sélectionnée. Si la position de consigne déterminée par le procédé selon l'invention n'est en revanche pas dans les limites permises, alors il est possible de déduire la vitesse de progression associée à un débit de dilution du fluide caloporteur permettant de rester dans les limites permise.

Bien entendu, l'invention n'est pas limitée aux modes de réalisation et aux modes de pilotage qui viennent d'être décrits. Le procédé selon l'invention est applicable à tous les types de mode de pilotage connus de l'homme du métier et pas seulement aux modes de pilotage mentionnés dans la présente demande.

Selon le mode de pilotage utilisé, la position consigne Z déterminée par le procédé selon l'invention prenant en compte la variation de la concentration de xénon ΔX peut être appliquée à au moins un groupe de barres de contrôle si le réacteur nucléaire comporte une pluralité de groupes de barres de contrôle ayant des caractéristiques d'absorption neutroniques différentes comme notamment dans les modes de pilotage G, X et T.

Le procédé selon l'invention est également applicable à un mode de pilotage limitant les volumes d'effluents par l'utilisation d'un groupe de barres de contrôle préalablement inséré. Dans ce mode de pilotage, le groupe inséré permet de reprendre les effets xénon (augmentation de la concentration) par extraction du groupe inséré lors d'un suivi de charge. Le procédé selon l'invention appliqué à ce mode de pilotage permettrait d'améliorer et d'optimiser le placement du groupe préalablement inséré de façon à minimiser les déplacements.

Le procédé selon l'invention a été particulièrement décrit en prenant comme durée estimée l'intervalle de temps estimé de l'augmentation de puissance du réacteur pour atteindre la valeur consigne en partant de la valeur effective ; toutefois, le procédé selon l'invention est également applicable en prenant en compte l'instant estimé de reprise de charge, c'est-à-dire la fin de la durée estimée du palier à la puissance effective avant l'augmentation de puissance, ce qui permet d'optimiser davantage la position de consigne Z des barres de contrôle.

Le procédé selon l'invention a été particulièrement décrit en prenant comme durée estimée l'intervalle de temps estimé de la variation de puissance du réacteur pour atteindre la valeur consigne en partant de la valeur effective ; toutefois, le procédé selon l'invention est également applicable en remplaçant la durée estimée de l'intervalle de temps de l'augmentation de puissance par la pente de l'augmentation de puissance du réacteur pour atteindre la valeur de consigne en partant de la valeur effective, exprimée par exemple en %/mn.

**Revendications**

1. Procédé de pilotage d'un réacteur nucléaire (100) à eau sous pression, ledit réacteur comportant :

   - un coeur (30) produisant une puissance ;
   - une pluralité de groupes de barres de contrôle (40) de la réactivité dudit coeur (30) susceptible d'occuper dans le coeur (30) une pluralité de positions d'insertion étagées verticalement à partir d'une position haute ;
   - des moyens pour acquérir des grandeurs représentatives des conditions de fonctionnement du coeur;

   ledit procédé comportant les étapes consistant à :

   - mesurer la puissance effective (Pe) du réacteur nucléaire ;
   - acquérir une valeur de consigne de la puissance cible (Pc) désirée du réacteur nucléaire (100);

   ledit procédé étant **caractérisé en ce qu'**il comporte en outre les étapes consistant à :

   - acquérir une durée estimée (DUREE) d'augmentation de puissance pour atteindre ladite valeur de consigne de la puissance cible (Pc) désirée, ladite durée estimée (DUREE) correspondant à la durée d'augmentation de puissance pour passer de ladite puissance effective (Pe) à ladite valeur de consigne de la puissance cible (Pc) ;
   - déterminer la position consigne (Z) d'au moins un groupe de barres de contrôle parmi ladite pluralité de barres de contrôle (40) pour atteindre ladite valeur de consigne de ladite puissance cible (Pc) désirée en fonction de ladite durée estimée (DUREE), de ladite puissance effective (Pe) mesurée et de ladite valeur consigne de ladite puissance cible (Pc) ;
   - contrôler la position dudit au moins un groupe de barres de contrôle de façon à le placer à sa position consigne (Z).

2. Procédé de pilotage d'un réacteur nucléaire (100) à eau sous pression selon à revendication précédente **caractérisé en ce que** ledit procédé comporte une étape consistant à acquérir un instant estimé (INST) de début de ladite augmentation de puissance, ledit instant estimé (INST) correspondant à la fin du palier de ladite puissance effective (Pe) et étant pris en compte dans l'étape de détermination de la position consigne (Z) d'au moins un groupe de barres de contrôle.

**3.** Procédé de pilotage d'un réacteur nucléaire (100) à eau sous pression selon la revendication 2 **caractérisé en ce que** ladite étape de contrôle est réalisée de façon à ce que ledit au moins un groupe de barres de contrôles soit positionné à sa position consigne (Z) au plus tard au début de ladite augmentation de puissance.

**4.** Procédé de pilotage d'un réacteur nucléaire (100) à eau sous pression selon l'une des revendications 1 à 3 **caractérisé en ce que** ledit procédé comporte une étape de régulation de la concentration de bore dans le fluide caloporteur en fonction de ladite position consigne (Z) d'au moins un groupe de barres de contrôle parmi ladite plurality de barres de contrôle (40) par des opérations de dilution et/ou de borication du fluide caloporteur primaire dudit réacteur nucléaire (100).

**5.** Procédé de pilotage d'un réacteur nucléaire (100) à eau sous pression selon l'une des revendications 1 à 4 **caractérisé en ce que** ladite étape de détermination de ladite position consigne (Z) dudit au moins un groupe de barres de contrôle est réalisée via des moyens logiciels mettant en oeuvre un code neutronique.

**6.** Procédé de pilotage d'un réacteur nucléaire (100) à eau sous pression selon l'une des revendications 1 à 5 **caractérisé en ce que** ladite étape de détermination de ladite position consigne (Z) dudit au moins un groupe de barres de contrôle comporte :

- une sous-étape de détermination d'une première position (dZ) d'au moins un groupe de barres de contrôle en fonction de ladite puissance effective (Pe) mesurée et de ladite valeur de consigne de la puissance cible (Pc) ;
- une sous-étape de détermination de la variation de la concentration de xénon (ΔX) dans ledit coeur dudit réacteur lors de la future augmentation de puissance, ladite variation de concentration de xénon (ΔX) étant fonction de ladite durée estimée (DUREE), et/ou de ladite puissance effective mesurée (Pe) et/ou de ladite valeur de consigne de la puissance cible (Pc) ;
- une sous-étape de détermination d'un facteur correctif (dZc) de la position d'au moins un groupe de barres de contrôle fonction de ladite variation de la concentration de xénon.

**7.** Procédé de pilotage d'un réacteur nucléaire (100) à eau sous pression selon l'une des revendications 2 à 5 **caractérisé en ce que** ladite étape de détermination de ladite position consigne (Z) dudit au moins un groupe de barres de contrôle comporte :

- une sous-étape de détermination d'une première position (dZ) d'au moins un groupe de barres de contrôle en fonction de ladite puissance effective (Pe) mesurée et de ladite valeur de consigne de la puissance cible (Pc) ;
- une sous-étape de détermination de la variation de la concentration de xénon (ΔX) dans ledit coeur dudit réacteur lors de la future augmentation de puissance, ladite variation de concentration de xénon (ΔX) étant fonction de ladite durée estimée (DUREE), et/ou de ladite puissance effective mesurée (Pe) et/ou de ladite valeur de consigne de la puissance cible (Pc), et/ou dudit instant estimé (INST) de début de l'augmentation de puissance ;
- une sous-étape de détermination d'un facteur correctif (dZc) de la position d'au moins un groupe de barres de contrôle fonction de ladite variation de la concentration de xénon.

**Patentansprüche**

**1.** Nuklearsteuerverfahren eines unter Druck stehenden Nuklearreaktors (100) mit Wasser, wobei der genannte Reaktor umfasst:

- einen eine Leistung produzierenden Kern (30);
- eine Vielzahl von Kontrollgruppen (40) der Reaktivität des genannten Kerns (30), die geeignet ist, im Kern (30) eine Vielzahl von vertikal von einer hohen Position aus gestuften Einfügepositionen zu belegen;
- Mittel zum Erwerb der die Betriebsbedingungen des Kerns darstellenden Größen;

wobei das genannte Verfahren die Stufen umfasst, bestehend in;

- der Messung der effektiven Leistung (Pe) des Nuklearreaktors;
- den Erwerb eines Sollwertes der gewünschten Zielleistung (Pc) des Nuklearreaktors (100);

wobei das genannte Verfahren **dadurch gekennzeichnet ist, dass** es darüber hinaus die Stufen umfasst, bestehend aus:

- dem Erwerb einer geschätzten Dauer (DUREE) der Erhöhung der Leistung, um den genannten Sollwert der gewünschten Zielleistung (Pc) zu erreichen, wobei die geschätzte Dauer (DUREE) der Erhöhung der Leistungsdauer entspricht, um von der genannten effektiven Leistung (Pe) zu dem genannten Sollwert der Zielleistung (Pc) überzugehen;
- der Bestimmung der Sollposition (Z) wenigstens einer Gruppe von Steuerstäben aus der genannten Vielzahl von Steuerstäben (40), um den genannten Sollwert der genannten gewünschten Zielleistung (Pc) in Abhängigkeit von der genannten geschätzten Dauer (DAUER) der genannten gemessenen effektiven Leistung (Pe) und dem genannten Sollwert der genannten Zielleistung (Pc) zu erreichen;

- der Kontrolle der Position der genannten wenigstens einen Gruppe von Kontrollstäben derart, dass sie in ihre Sollposition (Z) platziert wird.

2. Steuerverfahren eines unter Druck stehenden Nuklearreaktors (100) mit Wasser gemäß dem voranstehenden Anspruch, **dadurch gekennzeichnet, dass** das genannte Verfahren eine Stufe umfasst, die in dem Erwerb eines geschätzten Augenblicks (INST) des Beginns der genannten Erhöhung der Leistung besteht, wobei der genannte geschätzte Augenblick (INS) dem Ende der Phase der genannten effektiven Leistung (Pe) entspricht und in der Bestimmungsstufe der Sollposition (Z) wenigstens einer Kontrollgruppe berücksichtigt wird.

3. Steuerverfahren eines unter Druck stehenden Nuklearreaktors (100) unter Wasser gemäß Anspruch 2, **dadurch gekennzeichnet, dass** die genannte Kontrollstufe derart realisiert ist, dass die genannte wenigstens eine Gruppe von Kontrollstäben spätestens zu Beginn der genannten Erhöhung der Leistung in ihrer Sollposition (Z) positioniert ist.

4. Steuerverfahren eines unter Druck stehenden Nuklearreaktors (100) unter Wasser gemäß Anspruch 1 bis 3, **dadurch gekennzeichnet, dass** das genannte Verfahren eine Regulierungsstufe der Borkonzentration in dem Kühlmittel in Abhängigkeit von der genannten Sollposition (Z) wenigstens einer Gruppe von Kontrollstäben aus der genannten Vielzahl von Kontrollstäben (40) durch Verdünnungs- und / oder Borifizierungsoperationen der primären Kühlflüssigkeit des genannten Nuklearreaktors (100) umfasst.

5. Steuerverfahren eines unter Druck stehenden Nuklearreaktors (100) unter Wasser gemäß Anspruch 1 bis 4, **dadurch gekennzeichnet, dass** die genannte Stufe zur Bestimmung der genannten Sollposition (Z) der genannten wenigstens einen Gruppe von Kontrollstäben über Softwaremittel realisiert ist, die einen Neutronencode umsetzen.

6. Steuerverfahren eines unter Druck stehenden Nuklearreaktors (100) unter Wasser gemäß Anspruch 1 bis 5, **dadurch gekennzeichnet, dass** die genannte Stufe zur Bestimmung der genannten Sollposition (Z) der genannten wenigstens einen Gruppe von Kontrollstäben umfasst:

- eine Unterstufe zur Bestimmung einer ersten Position (dZ) wenigstens einer Gruppe von Kontrollstäben in Abhängigkeit von der genannten effektiven gemessenen Position (Pe) und des genannten Sollwertes der Zielleistung (Pc);

- eine Unterstufe zur Bestimmung der Variation der Konzentration des Xenons ($\Delta X$) in dem genannten Kern des genannten Reaktors bei der zukünftigen Erhöhung der Leistung, wobei die genannte Variation der Konzentration des Xenons ($\Delta X$) von der genannten geschätzten Dauer (DUREE) und / oder der genannten gemessenen effektiven Leistung (Pe) und / oder dem genannten Sollwert der Zielleistung (Pc) abhängt;

- eine Unterstufe zur Bestimmung eines korrektiven Faktors (dZc) der Position wenigstens einer Gruppe von Kontrollstäben in Abhängigkeit von der genannten Variation der Konzentration des Xenons.

7. Steuerverfahren eines unter Druck stehenden Nuklearreaktors (100) mit Wasser gemäß Anspruch 2 bis 5, **dadurch gekennzeichnet, dass** die genannte Stufe zur Bestimmung der genannten Sollposition (Z) der genannten wenigstens eine Gruppe von Kontrollstäben umfasst:

- eine Unterstufe zur Bestimmung einer ersten Position (dZ) wenigstens einer Gruppe von Kontrollstäben in Abhängigkeit von der genannten gemessenen effektiven Leistung (Pe) und dem genannten Sollwert der Zielleistung (Pc);

- eine Unterstufe zur Bestimmung der Variation der Konzentration des Xenons ($\Delta X$) in dem genannten Kern des genannten Reaktors bei der zukünftigen Erhöhung der Leistung, wobei die genannte Variation der Konzentration des Xenons ($\Delta X$) von der genannten geschätzten Dauer (DUREE) und / oder der genannten gemessenen effektiven Leistung (Pe) und / oder dem genannten Sollwert der Zielleistung (Pc) und / oder dem genannten geschätzten Augenblick (INST) des Beginns der Erhöhung der Leistung abhängt;

- eine Unterstufe der Bestimmung eines korrektiven Faktors (dZc) der Position wenigstens einer Gruppe von Kontrollstäben in Abhängigkeit von der genannten Variation der Konzentration des Xenons.

## Claims

1. Method for controlling a pressurized water nuclear reactor (100), said reactor comprising:

- a core (30) producing power;
- a plurality of control rod clusters (40) for controlling the reactivity of said core (30) capable of occupying in the core (30) a plurality of insertion positions staged vertically from an upper position;
- means for acquiring quantities representative of the operating conditions of the core;

said method comprising the steps consisting in:

- measuring the effective power (Pe) of the nuclear reactor;
- acquiring a reference value for the desired target power (Pc) of the nuclear reactor (100);

said method being **characterised in that** it further comprises the steps consisting in:

- acquiring an estimated power increase duration (DURATION) in order to achieve said reference value for the desired target power (Pc), said estimated duration (DURATION) corresponding to the time taken for the increase in power to increase from said effective power (Pe) to said reference value for the target power (Pc);
- determining the reference position (Z) of at least one control rod cluster among said plurality of control rods (40) in order to achieve said reference value for said desired target power (Pc) as a function of said estimated duration (DURATION), of said measured effective power (Pe) and of said reference value for said target power (Pc);
- monitoring the position of said at least one control rod cluster so as to position it in its reference position (Z).

2. Method for controlling a pressurised water nuclear reactor (100) according to the preceding claim **characterised in that** said method comprises a step consisting in acquiring an estimated instant (INST) of the start of said power increase, said estimated instant (INST) corresponding to the end of the stage of said effective power (Pe) and being taken into account in the step of determining the reference position (Z) of at least one control rod cluster.

3. Method for controlling a pressurised water nuclear reactor (100) according to claim 2 **characterised in that** said monitoring step is carried out so that said at least one control rod cluster is positioned in its reference position (Z) at the latest at the start of said power increase.

4. Method for controlling a pressurised water nuclear reactor (100) according to one of claims 1 to 3 **characterised in that** said method comprises a step of regulating the concentration of boron in the coolant as a function of said reference position (Z) of at least one control rod cluster among said plurality of control rods (40) by operations of dilution and/or boration of the primary coolant of said nuclear reactor (100).

5. Method for controlling a pressurised water nuclear reactor (100) according to one of claims 1 to 4 **characterised in that** said step of determining said reference position (Z) of said at least one control rod cluster is performed via software means implementing a neutron code.

6. Method for controlling a pressurised water nuclear reactor (100) according to one of claims 1 to 5 **characterised in that** said step of determining said reference position (Z) of said at least one control rod cluster comprises:

- a sub-step of determining a first position (dZ) of at least one control rod cluster as a function of said measured effective power (Pe) and of said reference value for the target power (Pc);
- a sub-step of determining the variation in the concentration of xenon ($\Delta X$) in said core of said reactor during the future power increase, said variation in the concentration of xenon ($\Delta X$) being a function of said estimated duration (DURATION), and/or of said measured effective power (Pe) and/or of said reference value for the target power (Pc);
- a sub-step of determining a corrective factor (dZc) for the position of at least one control rod cluster as a function of said variation in the concentration of xenon.

7. Method for controlling a pressurised water nuclear reactor (100) according to one of claims 2 to 5 **characterised in that** said step of determining said reference position (Z) of said at least one control rod cluster comprises:

- a sub-step of determining a first position (dZ) of at least one control rod cluster as a function of said measured effective power (Pe) and of said reference value for the target power (Pc);
- a sub-step of determining the variation in the concentration of xenon ($\Delta X$) in said core of said reactor during the future power increase, said variation in the concentration of xenon ($\Delta X$) being a function of said estimated duration (DURATION), and/or of said measured effective power (Pe) and/or of said reference value for the target power (Pc), and/or of said estimated instant (INST) of the start of the power increase;
- a sub-step of determining a corrective factor (dZc) for the position of at least one control rod cluster as a function of said variation in the concentration of xenon.

FIG.1

**FIG. 2**

Pe    Pc          DUREE      INST

$\Delta P$          44

$\Delta X$          45

$dZ=f(\Delta P)$          46

$dZc=f(\Delta X)$          48

84

47          dZ

$dZ + dZc$          dZc

Z

## FIG. 3

**Fig. 4A**

**Fig. 4B**

**Fig. 4C**

**EP 2 686 851 B1**

**RÉFÉRENCES CITÉES DANS LA DESCRIPTION**

**Documents brevets cités dans la description**

- EP 0083776 A2